**Europäisches Patentamt**

**European Patent Office**

**Office européen des brevets**

(19)

(11) Veröffentlichungsnummer: **0 360 780 B1**

# EUROPÄISCHE PATENTSCHRIFT

(12)

(45) Veröffentlichungstag der Patentschrift:
27.12.91 Patentblatt 91/52

(51) Int. Cl.⁵: **E05F 15/00, E05F 15/20**

(21) Anmeldenummer: **89890221.8**

(22) Anmeldetag: **29.08.89**

(54) **Fühlleiste.**

(30) Priorität: **01.09.88 AT 2139/88**

(43) Veröffentlichungstag der Anmeldung:
**28.03.90 Patentblatt 90/13**

(45) Bekanntmachung des Hinweises auf die
Patenterteilung:
**27.12.91 Patentblatt 91/52**

(84) Benannte Vertragsstaaten:
**CH DE FR GB IT LI SE**

(56) Entgegenhaltungen:
**AT-B- 382 925**
**DE-A- 3 416 546**

(73) Patentinhaber: **MEWALD GESELLSCHAFT
M.B.H.
Industriestrasse 1
A-2486 Pottendorf (AT)**

(72) Erfinder: **Mewald, Franz
Industriestrasse 1
A-2486 Pottendorf (AT)**

(74) Vertreter: **Itze, Peter, Dipl.-Ing. et al
Patentanwälte Casati, Wilhelm, Dipl.-Ing. Itze,
Peter, Dipl.-Ing. Amerlingstrasse 8
A-1061 Wien (AT)**

**Beschreibung**

Die Erfindung betrifft eine Fühlleiste in Form eines nachgiebigen Hohlkörpers zum Abstoppen der durch einen Antrieb erzeugten Bewegung mindestens eines verstellbaren Teiles bei dessen Anstoßen an ein Hindernis, insbesondere an der Schließkante eines Tores angeordnete Fühlleiste, in deren Innerem in einem an dem dem Trageprofil abgewandten, die Vorderkante bildenden Ende angeordneten Hohlprofil eine Lichtschranke angeordnet ist, bei welcher zumindest ein Teilstück des Lichtstrahles entlang der beim Anstoßen verformbaren Teile der Fühlleiste verläuft, wobei durch die beim Anstoßen auftretende Schwächung des Lichtes der Antrieb des bewegten Teiles abschalt- bzw. umkehrbar ist.

Fühlleisten dienen dazu, eine gefahrbringende Bewegung (z.B. jene der Schließkante eines Tores) abzustoppen oder umzukehren, wenn ein Hindernis im Bewegungsbereich ist. In den meisten Fällen erfüllt die Fühlleiste gleichzeitig die Dichtungsfunktion in der geschlossenen Stellung.

Die bis jetzt handelsüblichen Fühlleisten funktionieren mit einer in einem elastischen Schlauch entstehenden Luftdruckwelle : Beim Ankommen der Leiste an einem Hindernis wird über eine Leitung die Luftdruckwelle an einen Membranschalter weitergegeben. Infolge des geringen erzeugten Luftdruckes sind diese Membranschalter äußerst empfindlich und funktionieren meist nach einiger Zeit nicht mehr, was zu tödlichen Unfällen führen kann.

Es wurde daher gefordert, diese Fühlleisten selbstüberwachend bzw. eigensicher zu machen, d.h. daß bei Nichtfunktionieren des Systems die gesamte Anlage ausgeschaltet wird.

In der DE-C-2719438 wird eine nach dem Ruhestromprinzip arbeitende, selbstüberwachende Fühlleiste beschrieben, die einen Streifenschalter eingezogen hat, welcher am äußeren Ende einen Meßwiderstand über die beiden Leiter besitzt. Dadurch ist der Ruhestand als Stromfluß über den Widerstand definiert. Bei Unterbrechung der Zuleitung erfolgt durch ein Auswertegerät ein Kontaktalarm. Neben dem großen technischen Aufwand hat diese Fühlleiste den Nachteil, an den Enden, wo die Kontaktanschlüsse sind und wo durch Verkleben des Profils dieses wasserdicht gemacht wird, nicht mehr zu funktionieren. Weiters ist eine ein Ansprechen bewirkende Kraftanwendung nur von oben, d.h. in einer Richtung und nicht seitlich dazu, möglich

Aus der DE-A-3107847 geht eine ähnliche Ausbildung hervor, bei welcher elektromagnetische Wellen, z.B. Lichtwellen, durch ein gekrümmtes, geschlossenes Hohlprofil gesandt werden, wobei die Abnahme der Lichtintensität durch Verringerung des Durchgangsquerschnittes bei Einklemmen von Körperteilen als Regelimpuls für den Antrieb des zu schließenden Fensters dient. Insbesondere dadurch, daß das Hohlprofil, bis auf Entlüftungsöffnungen, geschlossen und mit reflektierendem Material ausgekleidet ist, spricht diese bekannte Ausbildung langsam an, was bereits zu Verletzungen führen kann.

Um die erwähnten Nachteile zu beseitigen, wurden Fühlleisten entwickelt, in deren Innerem eine Lichtschranke angeordnet ist, bei welcher zumindest ein Teilstück des Lichtstrahles entlang der beim Anstoßen verformbaren Teile der Fühlleiste verläuft, wobei durch die beim Anstoßen auftretende Unterbrechung der Lichtschranke der Antrieb des bewegten Teiles abschaltbar bzw. umkehrbar ist. Im Ruhezustand und bei ungestörter Bewegung wird also der Empfänger der Lichtschranke beleuchtet, so daß in diesem Zustand der Stromkreis der Antriebsvorrichtung nicht unterbrochen wird. Trifft dagegen, bei Auftreten eines Hindernisses und Verformung der Fühlleiste, den Empfanger kein Licht oder ist die Beleuchtung stark geschwächt, schaltet der Empfanger über übliche, vorzugsweise elektronische Schaltkreise die Stromversorgung des Antriebes ab bzw. kehrt diesen um. Störungen einer solchen Sicherheitsvorrichtung werden sich ferner dabei immer dadurch auswirken, daß die Beleuchtung des Empfängers ausfällt ; somit arbeitet eine solche Fühlleiste auch selbstüberwachend und eigensicher.

Eine solche Fühlleiste ist z.B. in der DE-A-2658660 bzw. der des den Oberbegriff anspruchs 1 bildenden AT-B 382925 beschrieben. Der Lichtstrahl der Lichtschranke verläuft dort in einem Hohlprofil mit annähernd kreisrundem Innenquerschnitt. Um den Lichtweg vom Sender zum Empfänger zu unterbrechen, muß der Innenquerschnitt des Hohlprofils zumindest an einer Stelle ganz zusammengedrückt werden. Bekanntlich ist ein solches gänzliches Verschließen eines schlauchartigen Körpers mit größeren Wandstärken nicht ohne weiteres möglich, so daß auch bei starkem Zusammendrücken des Hohlprofils immer noch Lichtanteile vom Sender zum Empfänger gelangen können. Daraus ergibt sich, daß die bekannte Lichtschranke unverläßlich arbeitet und daß insbesondere die Ansprechgenauigkeit, d.h. das Schalten der Lichtschranke bei einer bestimmten vorgegebenen Verformung der Fühlleiste nicht befriedigend ist.

Um ein zuverlässigeres Unterbrechen des Lichtweges der Lichtschranke beim Überschreiten einer vorgegebenen Verformung der Fühlleiste zu erzielen, sind gemäß der AT-B-382925 im Inneren der Fühlleiste zusätzlich Stege aus nachgiebigem Material mit Blendenöffnungen für den Durchtritt des Lichtstrahles angeordnet.

All den beschriebenen Ausführungen liegt der Nachteil zugrunde, daß sie zu unempfindlich in der Praxis sind, und zwar jene Systeme, bei denen eine völlige Unterbrechung des Lichtweges erforderlich ist, benötigen eine sehr starke Verformung der Fühlleiste, um zuverlässig den Lichtweg zu unterbrechen, und auch bei jenen Ausbildungen, welche bereits auf eine Schwächung des Lichtes reagieren, bedarf es einer starken Verformung der Fühlleiste, da nämlich aufgrund von an den Innenwandungen auftretenden Reflexionen die Schwächung des Lichtstrahles zumindest teilweise kompensiert wird, so daß auch bei diesen Ausbildungen stärkere Verformungen notwendig sind.

Der Erfindung liegt die Aufgabe zugrunde, eine Ausbildung der eingangs genannten Art zu schaffen, bei welcher bereits geringfügigere Verformungen, welche bei den herkömmlichen Ausbildungen ein Ansprechen des Empfängers noch nicht ausgelöst haben, zu einer Reaktion des Empfängers führen.

Erfindungsgemäß wird diese Aufgabe dadurch gelöst, daß der im Inneren des Hohlkörpers liegende Wandabschnitt des Hohlprofiles einen Schlitz aufweist, der bei Verformung des Hohlkörpers als Lichtaustrittsöffnung dient. Dadurch wird erreicht, daß bei einer Verformung der Fühlleiste das Hohlprofil entlang der Öffnung aufklafft, wodurch ein großer Teil des Lichtes, das sonst von der Innenwandung reflektiert werden würde, aus dem Hohlkörper austreten kann, wodurch bereits geringfügige Verformungen der Fühlleiste zu einem Ansprechen des Empfängers führen, wobei ein gleichmäßiges Öffnen des Schlitzes folgt, so daß unerwünschte Reflexionen innerhalb des Hohlprofils vermieden sind.

Um ein gleichmäßiges Aufklaffen des Schlitzes an jeder Stelle seines Verlaufes zu erzielen, kann der Schlitz achsparallel verlaufen. Weiters ist es für den angegebenen Zweck vorteilhaft, wenn sich der Schlitz über die gesamte Länge der Lichtschranke erstreckt. Für die Verwendung der Fühlleiste an bewegten Organen, welche breite Anprallflächen aufweisen, können in einem Hohlprofil parallel zueinander mehrere, mit Lichtschranken ausgerüstete Hohlprofile angeordnet sein. Zur Überwachung umlaufender Kanten oder Flächen kann die Fühlleiste abgewinkelt sein, wobei im Inneren des Hohlprofils in jedem im Bereich des Lichtschrankens liegenden Winkel ein Spiegelelement angeordnet sein.

In der Zeichnung sind Ausführungsbeispiele des Erfindungsgegenstandes dargestellt. Fig. 1 zeigt einen Längsschnitt durch eine erste Ausführungsform der Fühlleiste gemäß Linie I-I der Fig. 2. Fig. 2 ist ein Querschnitt durch die Fühlleiste, und zwar im unverformten Zustand derselben. Die Fig. 3 und 4 geben unterschiedliche Verformungsformen der Fühlleiste im Querschnitt wieder. Die Fig. 5 und 6 veranschaulichen eine andere Ausführungsform des Erfindungsgegenstandes, u.zw. in unverformtem und in verformtem Zustande. Fig. 7 ist ein Querschnitt durch eine weitere Ausführungsvariante. Fig. 8 zeigt einen Längsschnitt durch eine abgewinkelte Ausführungsvariante.

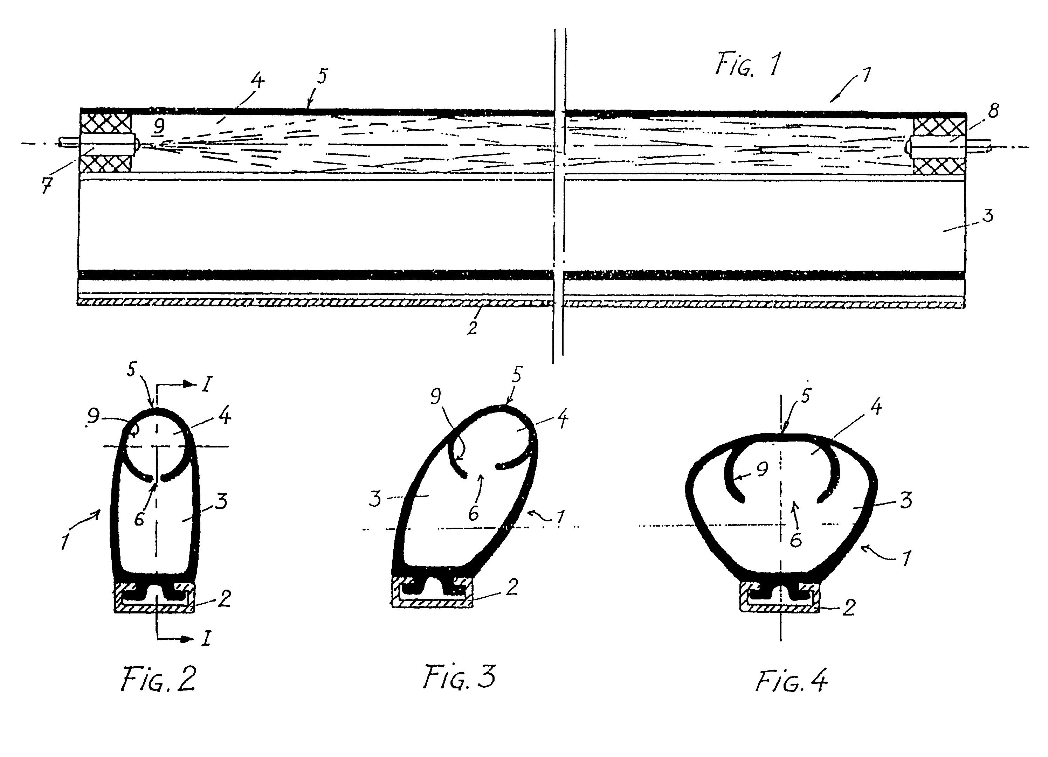

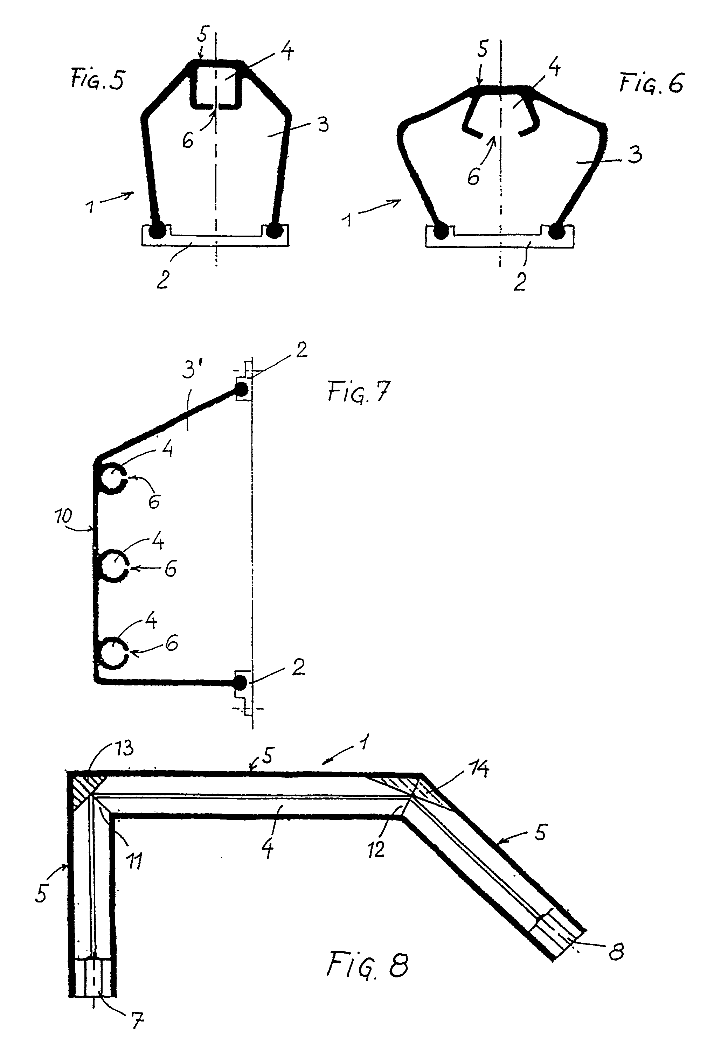

Mit 1 ist eine Fühlleiste bezeichnet, welche an einem Tragprofil, z.B. an dem vorderen Ende einer selbstschließenden Tür, angeordnet ist. Die Fühlleiste 1 weist einen Hohlkörper 3 auf, in welchem sich ein Hohlprofil 4 befindet, das an der Vorderkante 5 der Fühlleiste 1 angeordnet ist. Der Hohlkörper 3 ist gemäß den Fig. 1-4 als geschlossenes Oval, gemäß Fig. 5 und 6 als offenes Fünfeck und gemäß Fig. 7 als offenes Viereck ausgebildet, jedoch kann auch jede sonstige, passende Querschnittsform verwendet werden. Das Hohlprofil 4 befindet sich an dem in Schließrichtung vorderen Bereich der Fühlleiste 1 und kann einen Teil des vorderen Bereiches der Fühlleiste bilden. Das Hohlprofil 4 ragt damit in den Hohlkörper 3 hinein und weist in seinem in das Innere des Hohlkörpers 3 reichenden Teil einen in Längsrichtung verlaufenden Schlitz 6 auf. In der Zeichnung ist ein im Querschnitt rundes und ein im Querschnitt quadratisches Hohlprofil wiedergegeben, jedoch könnte jede andere Profilform, wie ein Polygon od. dgl. in gleicher Weise angewandt werden. An einem Ende des Hohlprofils 4 befindet sich ein Lichtsender 7, und am gegenüberliegenden Ende ein Lichtempfänger 8. Die Innenwandung 9 des Hohlprofils 4 ist vorliegend lichtreflektierend ausgebildet. Diese lichtreflektierende Eigenschaft der Innenwandung 9 kann auf verschiedene Arten erzielt werden, und zwar entweder durch entsprechend glatte Ausbildung der Oberfläche oder durch eine spezielle Wahl des Materials, z.B. Silikon, oder aber es kann ein reflektierender Überzug aufgebracht werden. Bei dem in Fig. 7 wiedergegebenen Ausführungsbeispiel sind ein einem Hohlkörper 3' mehrere, vorliegend drei, Hohlprofile 4 angeordnet, wobei die dargestellten Querschnittsformen von Hohlkörper 3' und Hohlprofilen 4, wie schon bezüglich der übrigen Ausführungsformen angeführt, durch beliebige, analoge Querschnittsformen ersetzt werden können. Die Vorderkante 5 der Ausführungsvariante gemäß Fig. 1 bis 6, die die Stoßkante 5 bildet, ist durch eine breite Stoßfläche 10 ersetzt, wobei auch bei Verformen nur eines der Hohlprofile 4 ein Ansprechen der Vorschubabschaltung erreicht wird.

Für eine Anwendung an umlaufenden oder abgewinkelten Stoßkanten bzw. -flächen ist die Ausführung gemäß Fig. 8 gedacht, bei welcher in jedem Winkel 11, 12 im Bereich des Lichtschrankens 7, 8 ein Spiegelement 13, 14 angeordnet ist, mit welchen der Lichtstrahl bei unverformter Fühlleiste gezielt zu dem Empfänger 8 reflektiert wird.

Im Ruhezustand befindet sich die Fühlleiste 1 in der in den Fig. 1 und 2 wiedergegebenen Lage. Wird nun ein seitlicher Druck auf die Fühlleiste 1 ausgeübt, dann verformt sich dieselbe wie in Fig. 3 wiedergegeben. Es ist dabei deutlich erkennbar, daß der Schlitz 6 eine wesentlich größere Breite erhält als in der Ruhestellung, so daß also ein Austreten des Lichtes aus dem Schlitz 6 in sehr hohem Maße gegeben ist. Durch entsprechende Einstellung der Empfindlichkeit des Empfängers 8 kann dabei vorgegeben werden, daß bereits eine derartig geringfügige Verformung der Fühlleiste 1 zu einem Abschalten bzw. Reversieren des Antriebes führt.

Bei einer auf die Vorderkante 5 einwirkenden Verformungskraft wird die Fühlleiste 1 in der in Fig. 4 bzw. 6 wiedergegebenen Weise verformt, wobei deutlich ersichtbar ist, daß dort der Schlitz 6 des Hohlprofils 4 noch weiter geöffnet wird, wodurch ein noch höherer Lichtverlust auftritt, wobei erkennbar ist, daß bereits eine nur teilweise Verformung der Fühlleiste 1 von der Vorderkante 5 her schon zu einem starken Öffnen des Schlitzes führt.

Durch dieses Öffnen des Schlitzes fehlt nämlich im Bereich der Öffnung jene Wandungsfläche, welche für die Reflexion des Lichtstrahles benötigt wird, so daß dadurch eine starke Schwächung des Lichtes eintritt.

In gleicher Weise wirkt auch die Ausbildung nach Fig. 7, wobei es, wie schon angeführt, ausreicht, wenn die Lichtintensität am Empfänger eines der Lichtschranken unter den vorgegebenen Schwellenwert fällt.

Bei der Ausführungsvariante nach Fig. 8 kommt zusätzlich zum Aufklaffen des Schlitzes 6 noch hinzu, daß bei einem Verformen der Vorderkante 5 des Hohlkörpers 3 (es könnte in gleicher Weise auch die Stoßfläche 10 gemäß bei einem Verformen der Vorderkante 5 des Hohlkörpers 3 (es könnte in gleicher Weise auch die Stoßfläche 10 gemäß Fig. 7 sein) die gegenseitige Winkelstellung der Spiegeln 13, 14 verändert wird, so daß auch dadurch die Intensität des auf den Empfänger 8 auftreffenden Lichtes verringert wird.

Es könnte auch, in nicht dargestellter Weise, der Sender des Lichtschrankens neben dem Empfänger angeordnet sein, wobei dann am gegenüberliegenden Ende der Fühlleiste ein den Lichtstrahl zum Empfänger reflektierender Spiegel vorgesehen ist.

Die Eigensicherung der erfindungsgemäßen Anordnung wird in bekannter Weise dadurch erreicht, daß man eine Lichtschranke mit einem Wechselkontakt als Ausgang verwendet. Diese schaltet bei Anlegen der Spannung und fällt ab, wenn der Lichtstrahl unterbrochen wird oder die Zuleitung beschädigt wird und die Spannung wegbleibt.

**Patentansprüche**

1. Fühlleiste in Form eines nachgiebigen Hohlkörpers (3) zum Abstoppen der durch einen Antrieb erzeugten Bewegung mindestens eines verstellbaren Teiles bei dessen Anstoßen an ein Hindernis, insbesondere an der Schließkante eines Tores angeordnete Fühlleiste (1), in deren Innerem in einem an dem dem Trageprofil (2) abgewandten, die Vorderkante bildenden Ende angeordneten Hohlprofil (4) eine Lichtschranke (7, 8) angeordnet ist, bei welcher zumindest ein Teilstück des Lichtstrahles entlang der beim Anstoßen verformbaren Teile der Fühlleiste (1) verläuft, wobei durch die beim Anstoßen auftretende Schwächung des Lichtes der Antrieb des bewegten Teiles abschalt- bzw. umkehrbar ist, dadurch gekennzeichnet, daß der im Inneren des länglichen Hohlkörpers (3) liegende Wandabschnitt (9) des Hohlprofiles (4) einen Schlitz (6) aufweist, der bei Verformung des Hohlkörpers (3) als Lichtaustrittsöffnung dient.

2. Fühlleiste nach Anspruch 1, dadurch gekennzeichnet, daß der Schlitz (6) achsparallel verläuft.

3. Fühlleiste nach Anspruch 1, dadurch gekennzeichnet, daß sich der Schlitz (6) über die gesamte Länge der Lichtschranke (7,8) erstreckt.

4. Fühlleiste nach Anspruch 1, dadurch gekennzeichnet, daß in einem Hohlprofil (3') parallel zueinander mehrere, mit Lichtschranken (7, 8) ausgerüstete Hohlprofile (4) angeordnet sind.

5. Fühlleiste nach Anspruch 1, dadurch gekennzeichnet, daß sie abgewinkelt ist, wobei im Inneren des Hohlprofils (4) in jedem im Bereich des Lichtschrankens (7, 8) liegenden Winkel (11, 12) ein Spiegelelement (13, 14) zur gezielten Ablenkung des Lichtstrahles des Lichtschrankens (7, 8) angeordnet ist.

**Claims**

1. Sensing strip in the form of a flexible hollow body (3) for stopping the drive-generated movement of at least one adjustable part when it butts against an obstacle, especially a sensing strip (1) which is arranged on the closing edge of a door and inside which is arranged, in a hollow section (4) located at the end facing away from the supporting section (2) and forming the front edge, a light barrier (7, 8), in which at least a portion of the light beam extends along the parts of the sensing strip (1) which are deformable during the butting, the drive of the moved part being disconnectable or reversible as a result of the weakening of the light occurring during the butting, characterised in that the wall portion (9) of the hollow section (4) located inside the elongate hollow body (3) has a slit (6) which serves as a light exit orifice during the deformation of the hollow body (3).

2. Sensing strip according to Claim 1, characterised in that the slit (6) is axis-parallel.

3. Sensing strip according to Claim 1, characterised in that the slit (6) extends over the entire length of the light barrier (7, 8).

4. Sensing strip according to Claim 1, characterised in that a plurality of hollow sections (4) equipped with light barriers (7, 8) are arranged parallel to one another in a hollow section (3').

5. Sensing strip according to Claim 1, characterised in that it is angled, and inside the hollow section (4) a mirror element (13, 14) for the controlled deflection of the light beam of the light barrier (7, 8) is arranged in each angle (11, 12) located in the region of the light barrier (7, 8).

## Revendications

1. Bordure détectrice se présentant sous la forme d'un corps creux (3) déformable, pour servir de butée au mouvement déplaçable produit par un entraînement d'au moins une partie déplaçable, lors de son accostage sur un obstacle, en particulier bordure détectrice (1), disposée sur l'arête de fermeture d'une porte, à l'intérieur de laquelle, dans un profilé creux (4), opposé au profilé support (2) et formant l'arête avant, est disposée une barrière photoélectrique (7, 8) pour laquelle au moins une fraction du rayon lumineux pesse le long des parties de la brodure détectrice (1) qui sont déformables lors de l'accostage, l'entraînement de la partie mobile étant susceptible d'être déconnecté, respectivement inversé, suite à l'atténuation lumineuse survenant lors de l'accostage, caractérisée en ce que la section de paroi (9), située à l'intérieur du corps creux (3) allongé, du profilé creux (4) présente une fente (6) qui sert d'ouverture de sortie de la lumière en cas de déformation du corps creux (3).

2. Bordure détectrice selon la revendication 1, caractérisée en ce que la fente (6) s'étend parallèlement à l'axe.

3. Bordure détectrice selon la revendication 1, caractérisée en ce que la fente (6) s'étend sur toute la longueur de la (7, 8) barrière photoélectrique.

4. Bordure détectrice selon la revendication 1, caractérisée en ce que plusieurs profilés creux (4), équipés de barrières photoélectriques (7, 8), s'étendent parallèlement dans un profilé creux (3').

5. Bordure détectrice selon la revendication 1, caractérisée en ce qu'elle est constituée d'angles, un élément réfléchissant (13, 14), servant à obtenir à dessein une déviation du rayon lumineux de la barrière photoélectrique (7, 8) étant disposé à l'intérieur du profilé creux (4), à chaque angle (11, 12) situé dans la zone du rayon lumineux (7, 8).

Fig. 1

Fig. 2

Fig. 3

Fig. 4

EP 0 360 780 B1

Fig.5

Fig.6

Fig.7

Fig.8